# EUROPÄISCHE PATENTSCHRIFT

(11) **EP 3 365 204 B1**
(45) Veröffentlichungstag und Bekanntmachung des Hinweises auf die Patenterteilung: **10.11.2021**
(21) Anmeldenummer: 16769997.4
(22) Anmeldetag: 21.09.2016
(51) Int. Cl.: B60T 8/17, B60T 8/1755, B60T 8/36

(54) **ELEKTRONISCHES BREMSDRUCKREGELSYSTEM**
ELECTRONIC CONTROL SYSTEM FOR BRAKING PRESSURE
SYSTÈME ÉLECTRONIQUE DE CONTRÔLE DE LA PRESSION DE FREINAGE

(30) Priorität: 19.10.2015 DE 102015220286
(43) Veröffentlichungstag der Anmeldung: 29.08.2018
(73) Patentinhaber: Robert Bosch GmbH, 70442 Stuttgart (DE)
(72) Erfinder: STEMMLER, Michael, 74074 Heilbronn (DE)
(86) Internationale Anmeldenummer: PCT/EP2016/072361
(87) Internationale Veröffentlichungsnummer: WO 2017/067730

(56) Entgegenhaltungen:
- EP-A1- 2 216 218
- EP-A1- 2 548 792

## Beschreibung

Die Erfindung betrifft ein elektronisches Bremsdruckregelsystem nach den Merkmalen des Oberbegriffs des Anspruchs 1.

### Stand der Technik:

Aus der EP 2 548 792 A sowie aus der EP 2 216 218 A ist jeweils ein Motorrad bekannt, das mit einem elektronischen Bremsdruckregelsystem ausgestattet ist.

Motorisierte Einspurfahrzeuge wie z.B. Motorräder oder Motorroller, aber auch Kleinkraftfahrzeuge wie Quads oder Dreiradfahrzeuge werden neuerdings vermehrt mit elektronischen Bremsdruckregelsystemen ausgestattet, um die Lenkbarkeit derartiger Fahrzeuge auch unter extremen Verzögerungsbedingungen aufrecht zu halten. Diese Systeme verhindern ein Blockieren der Fahrzeugräder während eines Bremsvorgangs, indem sie den Bremsdruck in den Radbremsen an die an den zugeordneten Rädern vorherrschenden Schlupfverhältnisse anpassen. Zu diesem Zweck ist ein Druckmittelaggregat vorhanden, welches einen, mit elektronisch ansteuerbaren Druckmittelsteuerkomponenten bestückten Gehäuseblock und ein elektronisches Bremsdrucksteuergerät umfasst. Das Bremsdrucksteuergerät wertet Daten z.B. von Raddrehzahlsensoren und von Bremsdrucksensoren aus und ermittelt aus den Messwerten eine bedarfsgerechte Ansteuerung der Druckmittelsteuerkomponenten bzw. nimmt diese Ansteuerung bedarfsgerecht vor.

In einer Ausbaustufe sind derartige Bremsdruckregelsysteme um eine Fahrdynamikregeleinrichtung erweiterbar. Diese Fahrdynamikregeleinrichtung stabilisiert das Fahrzeug während kritischen Fahrzuständen selbsttätig, d.h. ohne Mitwirkung des Fahrers. Sie ist dazu mit einer Dynamiksteuerungselektronik ausgestattet, welche fahrdynamische Kenngrößen des Fahrzeugs erfasst, auswertet und an das elektronische Bremsdrucksteuergerät zwecks eines Bremsdruckaufbaus oder einer Bremsdruckanpassung weiterleitet.

Die Dynamiksteuerungselektronik ist bei der oben genannten Fahrzeugkategorie eine vom Druckmittelaggregat unabhängige Baueinheit, die meist räumlich beabstandet vom Druckmittelaggregat am jeweiligen Fahrzeug angeordnet ist. Grund dafür ist, dass die Dynamiksteuerungselektronik u.a. mit Beschleunigungssensoren bestückt ist, deren bestimmungsgemäße Funktion durch fahrzeugseitige Störschwingungen, wie sie z.B. der Fahrzeugmotor erzeugt, beeinträchtigt werden kann. Eine Platzierung der Dynamiksteuerungselektronik am Fahrzeug ist deshalb derart vorgenommen, dass sie möglichst gut von Motorschwingungen entkoppelt ist, was allerdings bei den genannten Fahrzeugen bauartbedingt nur begrenzt möglich ist bzw. eine relativ aufwändige Suche nach einem dahingehend geeigneten Anbauort am Fahrzeug erfordert. Bremsdrucksteuergerät und Dynamiksteuerelektronik kommunizieren bei bekannten Systemen über eine extern ausgeführte Leitungsungsverbindung miteinander.

Bei konventionellen Personenkraftwagen ist es demgegenüber üblich, die Dynamiksteuerungselektronik der Fahrdynamikregelung in die Regelungselektronik des Bremsdrucksteuergeräts zu integrieren. Diese Maßnahme ist aufgrund der geringeren Stückzahlen bei Kleinkraftfahrzeugen oder Motorrädern aus Kostengründen nicht umsetzbar bzw. würde verschiedene Steuergeräteversionen, in jeweils nochmals geringerem Produktionsumfang notwendig machen. Bei Kleinkraftfahrzeugen zählt eine Fahrdynamikregelung zu den Wahlausstattungen, während sie bei Personenkraftfahrzeugen meist zur Standardausstattung gehört und dementsprechend in deutlich höheren Stückzahlen und zu entsprechend geringeren Kosten herstellbar ist.

Vor diesem Hintergrund bestand die Aufgabe der Erfindung darin, ein elektronisches Bremsdruckregelsystem vorzuschlagen, das optional eine Zusatzausstattung mit einer Fahrdynamikregeleinrichtung gestattet, ohne jedoch im Falle einer vorhandenen Fahrdynamikregeleinrichtung Nachteile hinsichtlich Montageaufwand am Fahrzeug oder hinsichtlich Funktionseinschränkungen aufgrund einwirkender fahrzeugseitiger Störschwingungen aufzuweisen.

### Vorteile der Erfindung

Die Erfindung nach den Merkmalen des Anspruchs 1 hat den Vorteil, dass mit elektronsichen Bremsdruckregelsystemen ausgestattete Fahrzeuge, insbesondere Einspurfahrzeuge oder motorisierte Kleinkraftfahrzeuge, wahlweise und kostengünstig um eine Fahrdynamikregeleinrichtung erweiterbar sind, ohne dadurch beim Fahrzeughersteller einen Mehraufwand hinsichtlich Montage und/oder Platzierung einer dazu notwendigen Dynamiksteuerungselektronik zu erfordern. Bremsdruckgeregelte Fahrzeuge mit oder ohne Fahrdynamikregelung greifen letztlich auf dieselben Basiskomponenten zurück und können deshalb trotz geringer Einzelstückzahlen parallel nebeneinander kostengünstig am Markt angeboten werden. Die Befestigung der Komponenten Druckmittelaggregat und/oder Dynamiksteuerungselektronik am Fahrzeug erfolgt unabhängig vom Ausstattungsumfang und gewährleistet dennoch eine schwingungstechnische Entkoppelung der dahingehend besonders empfindlichen Fahrdynamikregelung.

Erfindungsgemäß ist eine Dynamiksteuerungselektronik einer Fahrdynamikregelung dazu am Druckmittelaggregat befestigt und bildet zusammen mit dem Gehäuseblock und dem elektronischen Bremsdrucksteuergerät des Druckmittelaggregats eine beim Aggregatehersteller vormontierbare und am Fahrzeug verankerbare Baueinheit.

Mit einer derartigen Baueinheit ist die Art der Befestigung der Dynamiksteuerungselektronik seitens des Aggregateherstellers definiert und hinsichtlich der Entkoppelung möglicher fahrzeugseitiger Störschwingungen optimiert. Weil das Druckmittelaggregat zur Bremsdruckregelung seinerseits bereits durch schwingunsgdämpfende Maßnahmen am Fahrzeug befestigt ist und gegenüber der Dynamiksteuerungselektronik der Fahrdynamikregeleinrichtung eine deutlich größere Masse aufweist, ist eine Übertragung von fahrzeugseitigen Störschwingungen über das Druckmittelaggregat auf die Dynamiksteuerungselektronik wirksam gedämpft. Die Dynamiksteuerelektronik ist in anderen Worten derart entkoppelt, dass Störschwingungen keinen negativen Einfluss auf die Funktion oder die Lebensdauer der elektronischen Fahrdynamikregelung haben. Die bislang notwendige aufwändige Suche nach einem geeigneten Einbauort für die Dynamiksteuerungselektronik einer Fahrdynamikregelung am Fahrzeug entfällt ebenso ersatzlos, wie evtl. zusätzliche Halterungen zur schwingungsdämpfenden Befestigung der Dynamiksteuerungselektronik am Fahrzeug. Zudem ermöglicht eine erfindungsgemäße Anordnung der Dynamiksteuerungselektronik am Gehäuseblock und/oder am Steuergerät der Blockierschutzeinrichtung kürzeste Leitungsverbindungen zwischen der Dynamiksteuerungselektronik und dem elektronischen Steuergerät. Dies reduziert die Kosten für die Leitungsverbindung, senkt den Montageaufwand für die Leitungsverlegung und vermindert unter Alltagsbedingungen die Beschädigungsgefahr. Ungeachtet dessen erlaubt die Erfindung ein paralleles Angebot von Bremsdruckregelsystemen am Markt, die wahlweise mit oder ohne Fahrdynamikregeleinrichtung ausgestattet und ohne Mehraufwand am Fahrzeug befestigt werden können.

Weitere Vorteile oder vorteilhafte Weiterbildungen der Erfindung ergeben sich aus den Unteransprüchen oder aus der nachfolgenden Beschreibung.

### Zeichnung

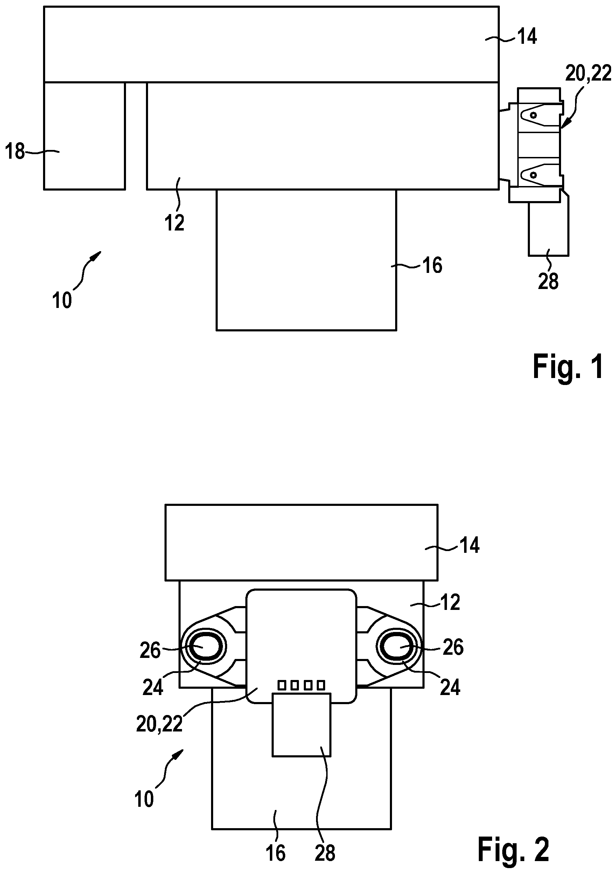

Ausführungsbeispiele der Erfindung sind in der Zeichnung dargestellt und werden in der nachfolgenden Beschreibung detailliert erläutert. Dabei sind die einander entsprechenden Bauteile oder Baugruppen der jeweiligen Figuren 1 bis 6 mit einheitlichen Bezugsziffern versehen.

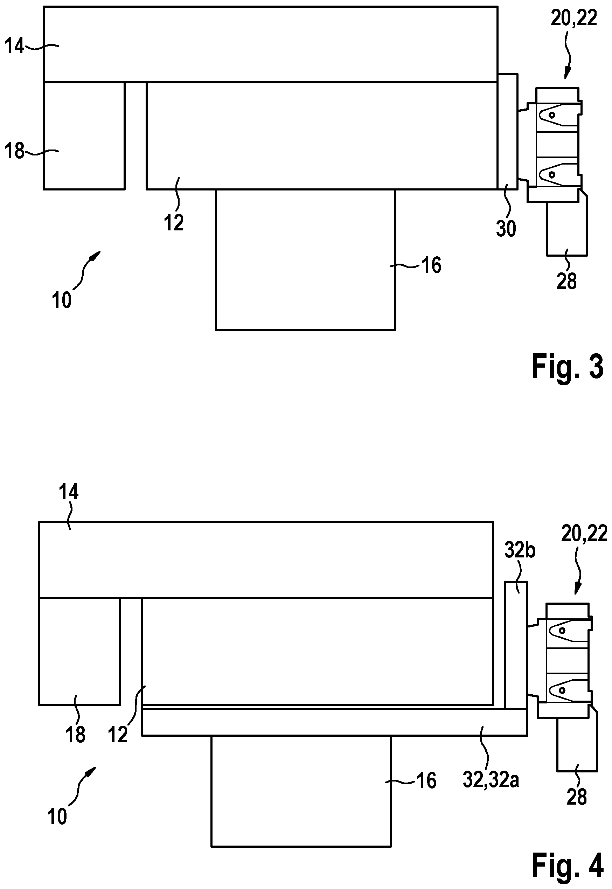

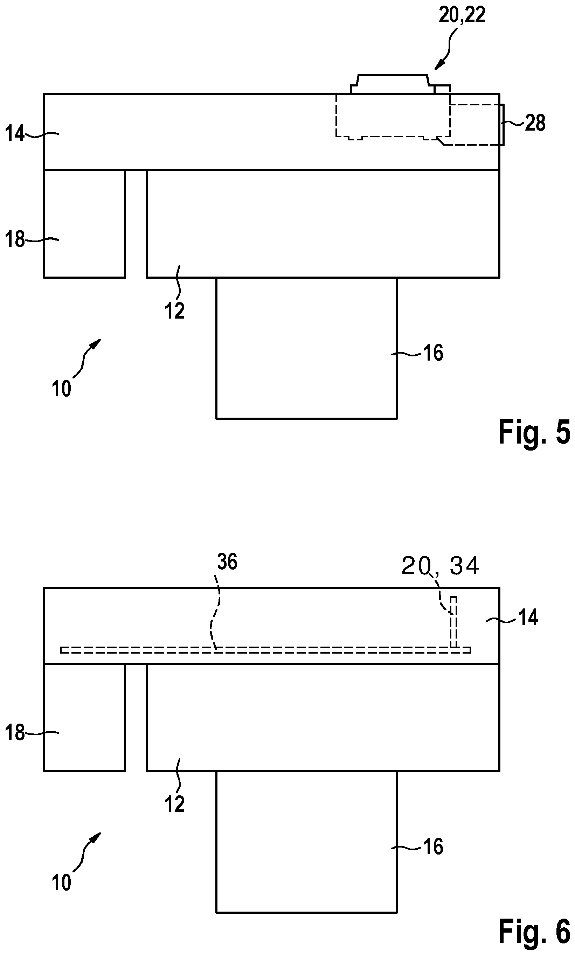

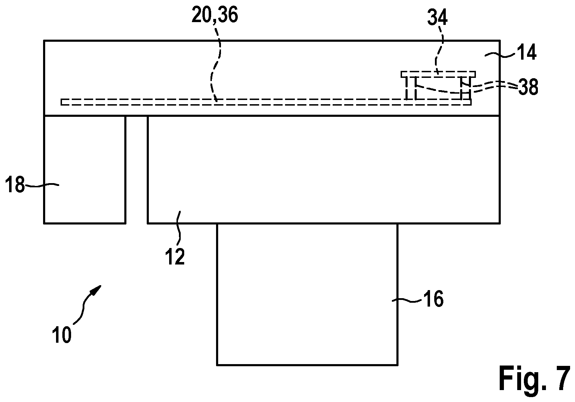

Dargestellt in den Figuren ist jeweils ein Druckmittelaggregat eines elektronischen Bremsdruckregelsystems mit einem Gehäuseblock, einem elektronischen Bremsdrucksteuergerät und einer Dynamiksteuerungselektronik, wobei:
gemäß den Figuren 1 und 2 diese Dynamiksteuerungselektronik unmittelbar am Gehäuseblock des Druckmittelaggregats befestigt ist;
gemäß Figur 3 die Dynamiksteuerungselektronik mittelbar am Gehäuseblock des Druckmittelaggregats befestigt ist;
gemäß Figur 4 die Dynamiksteuerungselektronik an einem Schenkel einer am Gehäuseblock angebrachten Konsole befestigt ist;
gemäß Figur 5 die Dynamiksteuerungselektronik an einer Außenseite des Bremsdrucksteuergeräts des Druckmittelaggregats befestigt ist und
gemäß den Figuren 6 und 7 die Dynamiksteuerungselektronik im Inneren des Bremsdrucksteuergeräts befestigt ist.

### Beschreibung der Ausführungsbeispiele

Die Figuren 1 und 2 zeigen in schematisch vereinfachter Darstellung ein Druckmittelaggregat 10 eines elektronischen Bremsdruckregelsystems, bestehend aus einem Gehäuseblock 12, einem elektronischen Bremsdrucksteuergerät 14 und einem Elektromotor 16, jeweils dargestellt in einer Frontal- und einer Seitenansicht. Der Gehäuseblock 12 ist quaderförmig gestaltet und weist eine erste Außenfläche, an der das Bremsdrucksteuergerät 14 angebracht ist, sowie eine der ersten Außenfläche gegenüberliegende zweite Außenfläche auf, an welcher der Elektromotor 16 angebracht ist. Das Bremsdrucksteuergerät 14 steht seitlich gegenüber einer ersten Seitenfläche des Gehäuseblocks 12 vor und ist an diesem vorstehenden Bereich mit einem Gerätestecker 18 versehen. Über den Gerätestecker 18 ist das Druckmittelaggregat 10 z.B. mit einer Spannungsversorgung und mit Signalleitungen kontaktierbar, durch welche das Bremsdrucksteuergerät 14 exemplarisch Bremsdruck- oder Raddrehzahlinformationen erfasst und weiter verarbeitet. Aus den Sensordaten ermittelt das Bremsdrucksteuergerät 14 Ansteuersignale zur Betätigung elektronisch ansteuerbarer Druckmittelsteuerkomponenten, wie beispielsweise Magnetventilen oder Pumpen. Letztere sind nicht erkennbar am Gehäuseblock 12 angeordnet und steuern den Bremsdruck in Radbremsen, welche über nicht dargestellte druckmittelführende Leitungen an den Gehäuseblock 12 angeschlossen sind. Eine Steuerung des Bremsdrucks erfolgt nach der Maßgabe ein Blockieren der den Radbremsen zugeordneten Räder des Fahrzeugs zu verhindern. Zur Bremsdruckregelung ist der Gehäuseblock 12 mit Pumpen bestückt, welche vom Elektromotor 16 nach Bedarf betätigt werden. Dazu ist der Elektromotor 16 mit dem Bremsdrucksteuergerät 14 elektrisch kontaktiert.

Das Druckmittelaggregat 10 bildet darüber hinaus mit einer Dynamiksteuerungselektronik 20 einer Fahrdynamikregelung eine vormontierbare Baueinheit aus. Diese Dynamiksteuerungselektronik 20 ist gemäß den Figuren 1 und 2 unmittelbar am Gehäuseblock 12 des Druckmittelaggregats 10 befestigt und weist ein zur Umgebung hin abgeschlossenes Elektronikgehäuse 22 auf. Am Elektronikgehäuse 22 sind Befestigungslaschen 24 mit daran ausgebildeten Durchstecköffnungen 26 für Befestigungsmittel, beispielsweise Schrauben, angeformt, so dass das Elektronikgehäuse 22 konventionell am Gehäuseblock 12 verankert werden kann.

Das Elektronikgehäuse 22 der Dynamiksteuerungselektronik 20 verfügt über einen eigenen Gerätestecker 28 und ist dadurch unabhängig vom Bremsdrucksteuergerät 14 an eine Spannungsversorgung anschließbar. Im Inneren des Elektronikgehäuses 22 sind nicht erkennbar Sensorelemente auf wenigstens einer Leiterplatte angeordnet, welche Kenngrößen erfassen, die den Fahrzustand des Fahrzeugs repräsentieren. Derartige Sensorinformationen können beispielsweise bei einem Einspurfahrzeug die Schräglage, die Fahrzeugbeschleunigung oder die Drehrate des Fahrzeugs, jeweils in den verschiedenen Raumachsen gemessen, sein. Die Dynamiksteuerelektronik 20 wertet diese Sensorinformationen elektronisch aus und ermittelt Ansteuersignale an das Bremsdruckregelsystem, durch welche sich der Fahrzustand des Fahrzeugs bei Bedarf stabilisieren lässt. Über eine extern ausgeführte Leitungsverbindung (nicht dargestellt) von der Dynamiksteuerungselektronik 20 zum Bremsdrucksteuergerät 14 werden diese Ansteuersignale an das Bremsdrucksteuergerät 14 weitergeleitet und bei der Einstellung des Bremsdrucks berücksichtigt.

Gemäß dem Ausführungsbeispiel nach Figur 1 ist die Dynamiksteuerungselektronik 20 unmittelbar am Gehäuseblock 12 des Druckmittelaggregats 10 befestigt. Diese Befestigung ist relativ einfach anhand konventioneller Befestigungsmittel dargestellt und hat den Vorteil, dass Temperaturänderungen in der Umgebung keinen wesentlichen Einfluss auf das Schwingungsverhalten des Druckmittelaggregats 10 sowie der daran angebauten Dynamiksteuerungselektronik 20 haben. Weil das Druckmittelaggregat 10 seinerseits bereits schwingungstechnisch gegenüber einem Fahrzeugmotor entkoppelt an einem Fahrzeug verankert ist, ist eine störungsfreie Funktion, d.h. eine zuverlässige Erfassung bzw. Auswertung der fahrdynamischen Kenngrößen durch die Dynamiksteuerungselektronik 20 gewährleistet.

Sollten die an der Dynamiksteuerungselektronik 20 unter Betriebsbedingungen auftretenden Schwingungsimpulse dennoch unzulässig hoch sein, so kann die in der Figur 3 dargestellte alternative Befestigungsmethode gewählt werden.

Dabei ist zwischen der Dynamiksteuerungselektronik 20 und dem Gehäuseblock 12 des Druckmittelaggregats 10 ein zusätzliches Dämpfungselement 30 vorgesehen. Als Dämpfungselement 30 kann beispielsweise ein plattenförmig ausgebildetes Elastomerteil vorgesehen werden, dessen Außenabmessung auf die Auflagefläche der Dynamiksteuereinrichtung 20 am Gehäuseblock 12 abgestimmt ist. Die Dämpfungseigenschaften des Elastomerteils lassen sich durch eine gezielte Auswahl des Elastomermaterials, durch die Dimensionierung, insbesondere der Scheibendicke des Dämpfungselements 30 und/oder durch konstruktive Maßnahmen wie beispielsweise ausgebildete Ausnehmungen oder Versteifungen am Dämpfungselement 30 anwendungsspezifisch festlegen.

Figuren 4 zeigt eine weitere Alternative zu einer schwingungsentkoppelten Befestigung der Dynamiksteuerungselektronik 20 am Gehäuseblock 12 des Druckmittelaggregats 10. Bei diesem Ausführungsbeispiel ist eine Winkelkonsole 32 vorgesehen, die mit einem ersten Schenkel 32a an der den Elektromotor 16 aufweisenden Außenseite des Gehäuseblocks 12 verankert ist und die an einem den Gehäuseblock 12 seitlich überragen Abschnitt einen rechtwinklig zum ersten Schenkel 32a abgewinkelten zweiten Schenkel 32b aufweist, welcher einen Flansch zur Befestigung des Elektronikgehäuses 22 der Dynamiksteuerungselektronik 20 ausbildet. Zwischen dem zweiten Schenkel 32b der Winkelkonsole 32 und der zugewandten Seitenfläche des Gehäuseblocks 12 besteht ein Luftspalt, wodurch der Übergang vom ersten zum zweiten Schenkel der Winkelkonsole als Gelenk wirkt, welches den zweiten Schenkel 32b schwingungstechnisch gegenüber dem ersten Schenkel 32a abkoppelt. Folglich werden evtl. Schwingungen des Druckmittelaggregats 10 allenfalls gedämpft auf den Flansch bzw. auf die am Flansch befestigte Dynamiksteuerelektronik 20 übertragen. Durch konstruktive Ausgestaltung des Übergangs vom ersten Schenkel 32a zum zweiten Schenkel 32b der Winkelkonsole 32, sowie durch die Abmessungen und/oder die Materialauswahl für die Winkelkonsole 32 kann deren Dämpfungswirkung anwendungsspezifisch festgelegt werden. Die Winkelkonsole 32 wirkt zusätzlich zu der ohnehin vorhandenen Abkoppelung des Druckmittelaggregats 10 gegenüber der Fahrzeugkarosserie und bewirkt zusätzlich eine Entkoppelung der Dynamiksteuerungselektronik 20 gegenüber dem Druckmittelaggregat 10.

Figur 5 zeigt eine Variante, bei welcher die Dynamiksteuerungselektronik 20 nicht mehr am Gehäuseblock 12 des Druckmittelaggregats 10 sondern vielmehr am Gehäuse des Bremsdrucksteuergeräts 14 festgelegt ist. Dieses Gehäuse ist beispielhaft an einer vom Elektromotor abgewandten Außenseite mit einer Ausformung versehen, in welche die Dynamiksteuerungselektronik 20 mit ihrem Elektronikgehäuse 22 und dem daran ausgebildeten Gerätestecker 28 zumindest abschnittsweise derart eingebettet ist, dass der Gerätestecker 28 zum Aufstecken eines Gegensteckers weiterhin zugänglich ist. Die Verankerung der Dynamiksteuerungselektronik 20 am Gehäuse des Bremsdrucksteuergeräts 14 erfolgt auf konventionelle Weise, beispielsweise durch wenigstens eine Schraubverbindung indem dieses Bremsdrucksteuergerät 14 mit beispielsweise mit Stehbolzen ausgestattet ist, in welche die Befestigungsschrauben der Dynamiksteuerungselektronik 20 eingeschraubt werden können. Ein Vorteil dieser Variante ist, dass keine separate Haltekonsole zur Befestigung der Dynamiksteuerungselektronik 20 notwendig ist und dass die Dynamiksteuerungselektronik 20 ihrerseits platzsparend und gegen äußere Beschädigungen geschützt am Druckmittelaggregat 10 befestigt ist.

Bei den in den Figuren 6 und 7 dargestellten Ausführungsvarianten ist die Dynamiksteuerungselektronik 20 ohne eigenes Elektronikgehäuse ausgeführt und besteht demnach aus einer Leiterplatte 34, welche mit den oben erläuterten Sensoren und den elektronischen Bauteilen zur Auswertung der erfassten Sensordaten bestückt ist. Diese Leiterplatte 34 ist im Inneren des Gehäuses des Bremsdrucksteuergeräts 14 untergebracht und an einer dem Bremsdrucksteuergerät 14 zugeordneten zweiten Leiterplatte 36 befestigt. Gemäß den Ausführungsbeispielen kann die Leiterplatte 34 der Dynamiksteuerungselektronik 20 senkrecht bzw. stehend oder parallel bzw. liegend zur Leiterplatte 36 des Bremsdrucksteuergeräts 14 angeordnet sein. Im zuletzt genannten Fall ist die Leiterplatte 36 des Bremsdrucksteuergeräts 14 mit Kontakpins 38 versehen, auf welche die Dynamiksteuerungselektronik 20 aufgesteckt und elektrisch an das Bremsdrucksteuergerät 14 angeschlossen ist. Bei beiden Ausführungsbeispielen wird demnach gleichzeitig mit der Befestigung der Leiterplatte 34 der Dynamiksteuerungselektronik 20 an der Leiterplatte 36 des Bremsdrucksteuergeräts 14 eine elektrische Verbindung zwischen den Leiterplatten bzw. zwischen den Steuergeräten hergestellt, so dass bei diesen Ausführungsbeispielen eine externe Leitungsverbindung eingespart wird.

Selbstverständlich sind Änderungen oder Ergänzungen gegenüber den beschriebenen Ausführungsbeispielen denkbar, ohne vom Grundgedanken der Erfindung abzuweichen.

## Patentansprüche

1. Elektronisches Bremsdruckregelsystem, insbesondere für motorisierte Einspurfahrzeuge und/oder für Leichtkraftfahrzeuge,
mit einer Antiblockierschutzregeleinrichtung zur Anpassung des Bremsdrucks wenigstens einer Radbremse des Fahrzeugs an die Schlupfverhältnisse eines dieser Radbremse zugeordneten Rades,
welche ein Druckmittelaggregat (10) umfasst, welches seinerseits ein mit elektronisch betätigbaren Druckmittelsteuerkomponenten wie bspw. Ventilen und/oder Pumpen bestückten Gehäuseblock (12) und
ein elektronisches Bremsdrucksteuergerät (14) umfasst,
wobei das Bremsdrucksteuergerät eine Ansteuerung der Druckmittelsteuerkomponenten bedarfsgerecht vornimmt und
mit einer Fahrdynamikregeleinrichtung zur Stabilisierung eines Fahrzustands des Fahrzeugs,
welche eine Dynamiksteuerungselektronik (20) umfasst, die fahrdynamische Kenngrößen des Fahrzeugs erfasst, zu Steuersignalen auswertet und diese Steuersignale dem Bremsdrucksteuergerät (14) zuführt,
**dadurch gekennzeichnet, dass**
die Dynamiksteuerungselektronik (20) am Druckmittelaggregat (10) befestigt ist und zusammen mit dem Druckmittelaggregat (10) eine vormontierbare, an einem Fahrzeug verankerbare Baueinheit ausbildet.

2. Bremsdruckregelsystem nach Anspruch 1, **dadurch gekennzeichnet, dass** die Dynamiksteuerelektronik (20) im Inneren eines Elektronikgehäuses (22) angeordnet ist, welches an einer Außenseite des Druckmittelaggregats (10) befestigt ist.

3. Bremsdruckregelsystem nach Anspruch 2, **dadurch gekennzeichnet, dass** zwischen dem Elektronikgehäuse (22) der Dynamiksteuerungselektronik (20) und dem Gehäuseblock (12) des Druckmittelaggregats (10) ein Dämpfungselement (30) angeordnet ist.

4. Bremsdruckregelsystem nach einem der Ansprüche 2 bis 3, **dadurch gekennzeichnet, dass** die Dynamiksteuerungselektronik (20) mit ihrem Elektronikgehäuse (22) an einer Konsole (32) verankert ist, welche am Druckmittelaggregat (10) befestigt ist.

5. Bremsdruckregelsystem nach Anspruch 1, **dadurch gekennzeichnet, dass** die Dynamiksteuerungselektronik (20) im Inneren eines Elektronikgehäuses (22) angeordnet ist, welches an einer Außenseite des Bremsdrucksteuergeräts (14) des Druckmittelaggregats (10) befestigt ist.

6. Bremsdruckregelsystem nach Anspruch 1, **dadurch gekennzeichnet,**
**dass** die Dynamiksteuerungselektronik (20) eine mit elektronischen Bauelementen und Sensoren bestückte Leitplatte (34) aufweist, welche im Inneren des elektronischen Bremsdrucksteuergeräts (14) angeordnet und an einer zweiten, dem Bremsdrucksteuergerät (14) zugeordneten Leiterplatte (36) befestigt ist.

7. Bremsdruckregelsystem nach Anspruch 6, **dadurch gekennzeichnet,**
**dass** die Leiterplatten (34; 36) der Dynamiksteuerungselektronik (20) und des Bremsdrucksteuergeräts (14) miteinander elektrisch kontaktiert sind.

8. Bremsdruckregelsystem nach einem der Ansprüche 1 bis 7, **dadurch gekennzeichnet, dass** Befestigungsmittel jeweils paarweise am Druckmittelaggregat (10) und an der Dynamiksteuerelektronik (20) vorgesehen sind, die eine mechanische Befestigung der Dynamiksteuerungselektronik (20) am Druckmittelaggregat (10) ermöglichen.

## Claims

1. Electronic brake pressure control system, in particular for motorized single-track vehicles and/or for light motor vehicles,
with an anti-lock control device for adjusting the brake pressure of at least one wheel brake of the vehicle to the slip conditions of a wheel associated with said wheel brake,
which comprises a pressure medium assembly (10), which for its part comprises a housing block (12) populated with electronically operated pressure medium control components, such as for example valves and/or pumps, and an electronic brake pressure control unit (14),
wherein the brake pressure control unit carries out actuation of the pressure medium control components as required, and
with a vehicle dynamics control device for stabilizing a driving state of the vehicle,
which comprises dynamic control electronics (20) that detect vehicle dynamic parameters of the vehicle, analyze said parameters to form control signals and feed said control signals to the brake pressure control unit (14), **characterized in that**
the dynamic control electronics (20) are attached to the pressure medium assembly (10) and form a premountable unit, which is able to be fixed to a vehicle, together with the pressure medium assembly (10).

2. Brake pressure control system according to Claim 1, **characterized in that**
the dynamic control electronics (20) are disposed within an electronics housing (22) that is attached to an external side of the pressure medium assembly (10).

3. Brake pressure control system according to Claim 2, **characterized in that**
a damping element (30) is disposed between the electronics housing (22) of the dynamic control electronics (20) and the housing block (12) of the pressure medium assembly (10).

4. Brake pressure control system according to either one of Claims 2 and 3, **characterized in that** the dynamic control electronics (20) with the electronics housing (22) thereof are fixed to a bracket (32) that is attached to the pressure medium assembly (10).

5. Brake pressure control system according to Claim 1, **characterized in that** the dynamic control electronics (20) are disposed within an electronics housing (22), which is attached to an external side of the brake pressure control unit (14) of the pressure medium assembly (10).

6. Brake pressure control system according to Claim 1, **characterized in that** the dynamic control electronics (20) comprise a circuit board (34) populated with electronic components and sensors, which is disposed within the electronic brake pressure control unit (14) and is attached to a second circuit board (36) that is associated with the brake pressure control unit (14).

7. Brake pressure control system according to Claim 6, **characterized in that** the circuit boards (34; 36) of the dynamic control electronics (20) and the brake pressure control unit (14) are electrically connected to each other.

8. Brake pressure control system according to any one of Claims 1 through 7, **characterized in that** attachment means are provided in each case in pairs on the pressure medium assembly (10) and on the dynamic control electronics (20), enabling mechanical attachment of the dynamic control electronics (20) to the pressure medium assembly (10).

## Revendications

1. Système de régulation de la pression de freinage électronique, notamment pour des véhicules à voie unique motorisés et/ou des véhicules automobiles légers, comprenant un dispositif de régulation de protection antiblocage destiné à adapter la pression de freinage d'au moins un frein de roue du véhicule en fonction des conditions de glissement d'une roue associée à ce frein de roue,
lequel comporte un groupe à fluide de pression (10) qui, de son côté, comporte un bloc boîtier (12) équipé de composants de commande de fluide de pression, par exemple des vannes ou des pompes, ainsi qu'un contrôleur de pression de freinage (14),
le contrôleur de pression de freinage réalisant une commande des composants de commande de fluide de pression en fonction du besoin
et
comprenant un dispositif de régulation de la dynamique de conduite destiné à stabiliser un état de conduite du véhicule,
lequel comporte une électronique de commande de la dynamique (20) qui acquiert des grandeurs caractéristiques de la dynamique de conduite du véhicule, les interprète en des signaux de commande et achemine ces signaux de commande au contrôleur de pression de freinage (14),
**caractérisé en ce que**
l'électronique de commande de la dynamique (20) est fixée au groupe à fluide de pression (10) et, conjointement avec le groupe à fluide de pression (10), forme une unité physique pouvant être préassemblée et pouvant être ancrée à un véhicule.

2. Système de régulation de la pression de freinage selon la revendication 1, **caractérisé en ce que** l'électronique de commande de la dynamique (20) est disposée à l'intérieur d'un boîtier électronique (22), lequel est fixé au niveau d'un côté extérieur du groupe à fluide de pression (10).

3. Système de régulation de la pression de freinage selon la revendication 2, **caractérisé en ce qu'**un élément d'amortissement (30) est disposé entre le boîtier électronique (22) de l'électronique de commande de la dynamique (20) et le bloc boîtier (12) du groupe à fluide de pression (10).

4. Système de régulation de la pression de freinage selon l'une des revendications 2 à 3, **caractérisé en ce que** l'électronique de commande de la dynamique (20) avec son boîtier électronique (22) est ancrée à une console (32) qui est fixée au groupe à fluide de pression (10).

5. Système de régulation de la pression de freinage selon la revendication 1, **caractérisé en ce que** l'électronique de commande de la dynamique (20) est disposée à l'intérieur d'un boîtier électronique (22) qui est fixé au niveau d'un côté extérieur du contrôleur de pression de freinage (14) du groupe à fluide de pression (10) .

6. Système de régulation de la pression de freinage selon la revendication 1, **caractérisé en ce que** l'électronique de commande de la dynamique (20) possède un circuit imprimé (34) équipé de composants électroniques et de capteurs, lequel est disposé à l'intérieur du contrôleur de pression de freinage (14) électronique et est fixé à un deuxième circuit imprimé (36) associé au contrôleur de pression de freinage (14).

7. Système de régulation de la pression de freinage selon la revendication 6, **caractérisé en ce que** les circuits imprimés (34 ; 36) de l'électronique de commande de la dynamique (20) et du contrôleur de pression de freinage (14) sont mis en contact électrique l'un avec l'autre.

8. Système de régulation de la pression de freinage selon l'une des revendications 1 à 7, **caractérisé en ce que** des moyens de fixation sont respectivement présents par paires au niveau du groupe à fluide de pression (10) et au niveau de l'électronique de commande de la dynamique (20), lesquels rendent possible une fixation mécanique de l'électronique de commande de la dynamique (20) au groupe à fluide de pression (10).
